# EUROPEAN PATENT SPECIFICATION

(11) **EP 2 544 352 B1**
(45) Date of publication and mention of the grant of the patent: **20.09.2017**
(21) Application number: 12174924.6
(22) Date of filing: 04.07.2012
(51) Int. Cl.: H02M 3/335, H02M 7/217, H02M 1/32, H02M 1/00

(54) **Momentary power interruption and voltage dips reset protection**
Rücksetzschutz für vorübergehende Stromversorgungsunterbrechung und Spannungsabfälle
Interruption momentanée de l'alimentation et protection de réinitialisation de chutes de tension

(30) Priority: 08.07.2011 TR 201106822
(43) Date of publication of application: 09.01.2013
(73) Proprietor: Vestel Elektronik Sanayi ve Ticaret A.S., 45030 Manisa (TR)
(72) Inventor: Kirisken, Barbaros, 45030 Manisa (TR); Yatir, Mustafa Nevzat, 45030 Manisa (TR)
(74) Representative: Cayli, Hülya

(56) References cited:
- WO-A1-99/05790
- WO-A1-02/075909
- JP-A- H07 123 719
- JP-A- H09 121 537
- US-B1- 6 426 886
- US-B1- 6 504 267

## Description

### Technical Field

The present invention is related to the switching mode power supplies with voltage irregularity protection.

### Prior Art

Momentary power failures and voltage dips are common mains irregularities (electrical transient), generally caused by electricity network or the high inrush currents of the other goods in same power distribution system. Although such irregularities generally last a small amount of time (order of milliseconds), this time is enough to reset some device components, especially microcontrollers. When a micro controller resets due to power failure, whole system that is controlled by said micro controller also resets. Especially in the new television systems, such system reset is very annoying for the users, since new television systems use operating systems those have a start up duration which lasts at least 20 seconds. In the past, television systems used simple software, which starts up in approximately 5 seconds, and such system reset was not a big problem for users. However in the present day since system start up requires much longer time duration, it is important to prevent system reset during the momentary power failures and voltage dips.

In the new television systems, the switching mode power supplies (SPMS) are used to supply power to the system. In these television systems, the common technique for preventing system reset during such power failure is using a bulk capacitor to feed integrated circuits or increasing the bulk capacitance of the SMPS. However, in the slim designs, such as LCD TV or LED TV, increasing the bulk capacity of the SMPS may not be possible.

Patent document US 5491794 A discloses a television system. Said system comprises a microprocessor that controls a horizontal deflection circuit which is coupled to run mode power supply to define a standby operating mode and a run operating mode. The microprocessor has a power-up reset input terminal which initializes operation upon application of AC mains power. The run mode power supply is coupled to at least one load which is subject to over current or overvoltage faults. A fault detection circuit detects fault conditions in the run mode power supply loads such as overvoltage or over current and anomalous vertical deflection current. When a fault detected, television system goes to standby condition, which requires less energy.

### Brief Description of the Invention

Present invention discloses a power supply system and a reset protection method for this system. Said system comprises; at least one rectifier, which is connected to the mains input and rectifies the input voltage; at least one transformer, which is arranged to convert the rectified input voltage to output voltages at the said voltage outputs; at least one bulk capacitance to remove voltage discontinuities of the transformer input voltage; at least two switching elements, which switches input currents to the transformer; at least one controller, which is arranged to control duration of conduction of at least one of the switching elements within a predefined duration limits, in accordance with the voltage value of at least one of the outputs of the transformer and a required voltage value at the said output; at least one low voltage output and at least one high voltage output; at least one comparison means, which is arranged to measure the rectified input voltage and cancel out at least one switching element in case said rectified input voltage drops below a predefined threshold voltage and at least one regulator, which is connected to said high voltage output of the transformer and is arranged to output a voltage equal to the voltage of the low voltage output of the transformer.

Reset protection method comprises the steps of; measuring an input voltage of the power supply system; comparing measured voltage with a predefined threshold; cancelling out at least one switching element if the measured voltage is lower than said threshold. According to the present invention, when said switching element is cancelled out, the main circuit is fed through at least one regulator which is powered from the high voltage output of the power supply system.

### Object of the Invention

The object of the invention is to provide a power supply system with voltage irregularity protection.

Another object of the invention is to provide a power supply system that prevents connected circuit components from going reset during a voltage irregularity.

Another object of the present invention is to reduce the bulk capacitance of a power system.

### Description of the Drawings

**Figure 1** shows a power supply system known in the prior art.
**Figure 2** shows the power supply system of the present invention.
**Figure 3** shows the voltage characteristics of the power supply system known in the prior art.
**Figure 4** shows the voltage characteristics of the power supply system of the present invention.

The reference numbers as used in figures may possess the following meanings;

| | |
|---|---|
| Power supply system in the prior art | (S1) |
| Power supply system of the present invention | (S2) |
| Input voltage | (Vin) |
| Transformer input voltage | (V_{T}) |
| High control voltage | (H) |
| Low control voltage | (L) |
| Transformer output voltage | (V_{CC}) |
| Time | (t) |
| Capacitance | (C1, C2, C3) |
| Transistor | (M1, M2) |
| Rectifier | (1) |
| Controller | (2) |
| Comparison means | (3) |
| Regulator | (4) |
| Main circuit | (5) |

### Detailed Description of the Invention

Old television sets or set top boxes had simple software such that they go on to normal operation mode at most 5 seconds after they are powered on or woke up from standby mode. But recent television sets have operating systems inside which start up at minimum 20 seconds. These sets tend to reset frequently when the electricity network is unstable or heavily loaded with devices with high surge currents. The reset operation disables the device for several seconds (minimum 20 seconds), which affect user experience considerably. The power supply system and reset protection method of the present invention is developed to solve stated problem.

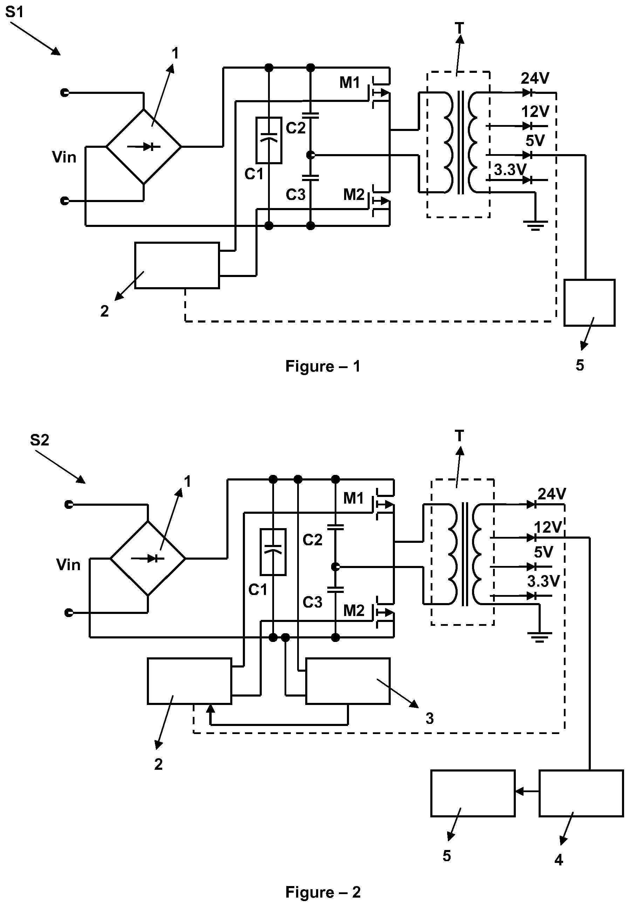

In Figure 1, a power supply system in the prior art (S1) is given, which is a switching mode power supply (SMPS). Said SMPS comprises at least one rectifier (1) which rectifies AC input voltage (Vin) (generally mains voltage); a transformer (T) which converts transformer input voltage (V_{T}) to different output voltages (V_{CC}); at least one switching element, preferably at least one transistor (M1, M2), for controlling the current supplied to the transformer (T) by switching the voltage applied to the transformer (T); at least one controller (2) for controlling the conduction state of the switching elements and at least one bulk capacitance (C1) to remove voltage discontinuities of the transformer input voltage (V_{T}). Said output voltages ((V_{CC}) may have different voltage magnitudes. For example, in a television system there may be 3.3 V, 5V, 12V and 24V outputs. 5V output is generally used for powering the main circuit (5) of the system. When this 5V is interrupted, since main circuit (5) is not powered during the interruption interval, main circuit (5) goes to reset.

In this power supply system (S1), transformer (T) is powered through transistors (M1, M2) and type of the SMPS is generally defined by the number and configuration of these transistors. In Figure 1, a half-bridge SPMS is given. Transformer (T) of the SMPS is powered by sequentially switching transistors (M1, M2), creating a fluctuating current over the transformer (T). Said fluctuating current is preferably created by applying a high control voltage (H) to the ground of one transistor (M1) and applying a low control voltage (L) to the ground of the other transistor (M2). High control voltage (H) and low control voltage (L) are generally square wave voltages. These high control voltage (H) and low control voltage (L) are generated by controller (2). Duty cycle of the transformer (T) is adjusted by arranging the duty cycles of these control voltages (H, L). Controller (2) measures at least one of the output voltages ((V_{CC}) of the transformer (T) and adjusts the duty cycle of the transformer (T). However, this adjustment has a limit. Maximum and minimum values of the duty cycle of the switching elements (M1, M2) are limited by the controller (2).

In Figure 2, the power supply system of the present invention (S2) is given. Said system (S2) comprises;
- at least one rectifier (1), which is connected to the mains input and rectifies the input voltage;
- at least one transformer (T), which is arranged to convert the rectified input voltage (V_{T}) to output voltages ((V_{CC}) ;
- at least one bulk capacitance (C1) to remove voltage discontinuities of the transformer input voltage (V_{T});
- at least two switching elements (M1, M2), which control input currents of the transformer (T);
- at least one controller (2), which is arranged to control duration of conduction of at least one of the switching elements within a predefined duration limits, in accordance with the voltage value of at least one of the outputs (V_{CC}) of the transformer (T) and a required voltage value at the said output (V_{CC});
- at least one comparison means (3), which is arranged to measure the rectified input voltage (V_{T}) and cancel out at least one switching element in case said rectified input voltage (V_{T}) drops below a predefined threshold voltage and
- at least one regulator (4), which is connected to said high voltage (24V or 12V) output of the transformer and is arranged to output a voltage equal to the voltage of the low voltage output (5V or 3.3V) of the transformer.

Said system (S2) comprises at least one low voltage output (i.e. 5V or 3.3V) and at least one high voltage output (i.e. 12V or 24V). Said low output voltages (5V or 3.3V) may be output of the transformer (T) or output of the regulator (4) directly. Said switching elements are preferably transistors (M1, M2).

In an embodiment of the present invention, a half bridge configuration switching mode power supply, which is given in Figure 1, is used in the power supply system of the present invention (S2). In this configuration, controller (2) controls switching operation of the two transistors (M1, M2). Controller (2) supplies high control voltage (H) and low control voltage (L) to these transistors (M1, M2). In this configuration, transformer input voltage (V_{T}) is supplied to the transformer (T) with a duty cycle by using high control voltage (H) and low control voltage (L) with preferably constant frequencies. This duty cycle may be adjusted by the output voltage ((V_{CC}) of the transformer (T). According to this embodiment, with a constant frequency input voltage (Vin), power supply system (S2) outputs different constant voltages, namely 3.3V, 5V, 12V and 24V. In this system (S2), when the input voltage (Vin) is interrupted (for example when a momentary power failure or a voltage dip occurs), transformer input voltage (V_{T}) decreases. If the transformer input voltage (V_{T}) decreases below said threshold voltage, comparison means (3) cancels out one of the transistors (M1, M2). Comparison means (3) may cancel out said transistor (M1, M2) directly or may send a signal to controller (2) to make controller (2) cancel out one of the transistors (M1, M2). Said system (S2), may also comprise an inhibition means which is connected to the comparison means (3) and cancels out at least one transistor when the comparison means (3) detects that said rectified input voltage (V_{T}) drops below said predefined threshold voltage. When one of the transistors (M1, M2) is cancelled out, system (S2) reduces from half bridge configuration to the flyback configuration. With this change, effective current input duration of the transformer (T) halves and output voltages ((V_{CC}) of the transformer (T) also halves. In other words, new output voltages become 1.65V, 2.5V, 6V and 12V respectively. In this situation, controller (2) acts to increase the duty cycle of the transistor since output voltages ((V_{CC}) are reduced. However, since maximum duty cycle of the transformer (T) is limited, controller limits the duty cycle and output voltages ((V_{CC}) of the transformer (T), so these values cannot be restored. Thus, the operation of the components, which are powered by 12V and 24V, are interrupted because of under voltage lock outs. On the other hand, voltage regulator (4), which converts high voltages (12V or 24V) to 5V and/or 3.3V, powers the circuits which are powered by 5 and 3.3 volts. Since the components that are powered by 24V and 12V are cancelled out, all the energy stored on the bulk capacitor (C1) is used for powering the circuits which are powered by 5 and 3.3 volts during the interruption. In other words, with the present invention during a voltage interruption, energy stored on the bulk capacitor (C1) is used only for powering the main circuits (5). Thus, reset operation of the main circuit (5), which are powered by 5V, is delayed in an input failure situation.

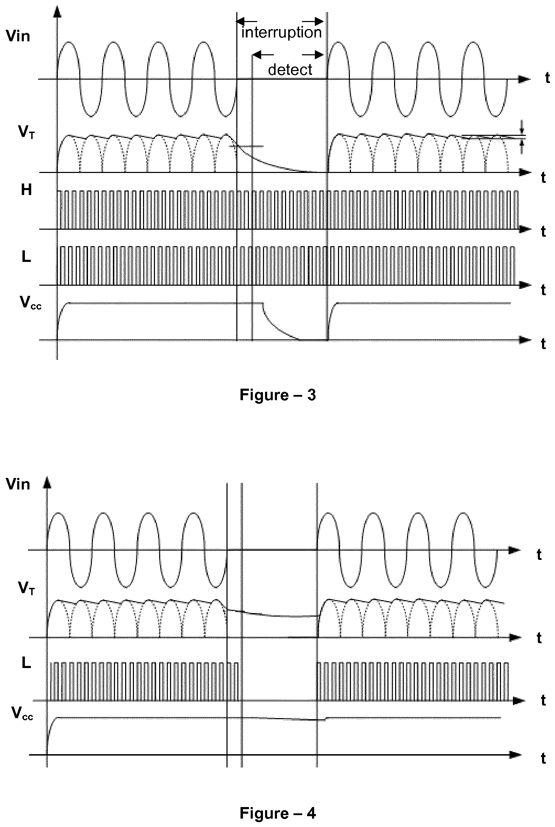

In Figure 3 and 4, voltage characteristics of the power supply system in the prior art (S1) and power supply system of the present invention (S2) are given respectively. As can be seen from Figure 3, when a voltage interruption occurs in the system of the prior art (S1), transformer input voltage (V_{T}) reduces to 0 rapidly since bulk capacitance (C1) powers all the components of the system. On the other hand, as can be seen in Figure 4, according to the present invention since unnecessary components, which are powered by relatively high voltages, are cancelled out transformer input voltage (V_{T}) reduces to 0 slowly.

In another preferred embodiment of the present invention, a full bridge configuration is used in the SMPS. In this configuration, when the input voltage (Vin) is interrupted, SMPS is reduced to either half bridge configuration or fly back configuration by cancelling out at least one transistor. Thus, duty cycle of the transformer is reduced to half (or one quarter) and output voltages are also reduced respectively.

In a preferred embodiment of the present invention, low voltage output (i.e. 3.3V or 5V) of the power supply system of the present invention (S2) connected to the output of the regulator (4). Preferably, there is at least one another switching element in connection with low voltage output (i.e. 3.3V or 5V) of the system (S2) and output of the regulator (4). Said switching element enables low voltage output (i.e. 3.3V or 5V) of the system (S2) to power the main circuit (5) during normal voltage input situation and enables the regulator (4) to power the main circuit (5) when the comparison means (3) detects that said rectified input voltage (V_{T}) drops below said predefined threshold voltage.

In another preferred embodiment of the present invention, at least one diode is connected in series to either low voltage output of the system (S2) and/or output of the regulator (4). By using said diode, only one source (either regulator (4) or low voltage output) supplies voltage to the main circuit (5) at a time and preferably the regulator (4) is used only when the comparison means (3) detects that said rectified input voltage (V_{T}) drops below said predefined threshold voltage.

According to the present invention, when a momentary power failure or a voltage dip occurs, all the power stored in the bulk capacitor (C1) is used only for powering the main circuits (5) of the system. Thus, according to the present invention the time that requires to main circuit (5) goes reset is extended.

## Claims

1. A power supply system (S2) which comprises;
- at least one rectifier (1), which is connected to the mains input and rectifies the input voltage (Vin);
- at least one transformer (T), which is arranged to convert the rectified input voltage (V_{T}) to output voltages ((V_{CC});
- at least one bulk capacitance (C1) to remove voltage discontinuities of the transformer input voltage (V_{T});
- at least two switching elements, which switches input currents to the transformer (T);
- at least one controller (2), which is arranged to control duration of conduction of at least one of the switching elements within a predefined duration limits, in accordance with the voltage value of at least one of the outputs ((V_{CC}) of the transformer (T) and a required voltage value at the said output ((V_{CC});
- at least one low voltage output and at least one high voltage output **characterized in that** said power supply system further comprises;
- at least one comparison means (3), which is arranged to measure the rectified input voltage (V_{T}) and cancel out at least one switching element in case said rectified input voltage (V_{T}) drops below a predefined threshold voltage;
- at least one regulator (4), which is connected to said high voltage output of the transformer and is arranged to output a voltage equal to the voltage of the low voltage output of the transformer
- at least one another switching element, which enables low voltage output of the system (S2) to power a main circuit (5) during normal voltage input situation and which enables the regulator (4) to power the main circuit (5) when the comparison means (3) detects that said rectified input voltage (V_{T}) drops below said predefined threshold voltage.

2. A power supply system (S2) according to claim 1 **characterized in that**; it further comprises at least one inhibition means which is connected to the comparison means (3) and cancels out at least one switching element when the comparison means (3) detects that said rectified input voltage (V_{T}) drops below said predefined threshold voltage.

3. A power supply system (S2) according to claim 1 **characterized in that**; it further comprises at least one diode which is connected in series to either low voltage output of the system (S2) or output of the regulator (4).

4. A reset protection method for systems comprising a power supply system (S2) with at least one low voltage output, at least one high voltage output and at least two switching elements which are arranged to control power flow of the power supply system (S2); and at least a main circuit (5) which is fed through the low voltage output of the power supply system (S2), **characterized in that** said method comprises the steps of;
- measuring an input voltage (V_{T}) of the power supply system (S2);
- comparing measured voltage with a predefined threshold;
- cancelling out at least one switching element if the measured voltage is lower than said threshold
wherein when said switching element is cancelled out, the main circuit (5) is fed through at least one regulator (4) which is powered from the high voltage output of the power supply system (S2).

## Patentansprüche

1. **Netzteil-Versorgungsystem** (S2), umfassend
- zumindest einen Gleichrichter (1), welcher mit der Netz-Eingangsspannung verbunden ist und die Eingangsspannung (Vin) gleichrichtet;
- zumindest einen Transformator (T), der angeordnet ist, die gleichgerichtete Eingangsspannung (V_{T}) in Ausgangsspannungen (V_{CC}) umzusetzen oder zu konvertieren;
- zumindest eine Bulk- oder große Kapazität (C1), um Spannung-Ungleichheiten oder Unterbrechungen der Transformator-Eingangsspannung (V_{T}) zu beheben oder zu beseitigen;
- zumindest zwei Schaltelemente, welche Eingangsströme zu dem Transformator (T) schalten;
- zumindest eine Steuerung oder ein Steuergerät (2), welches ausgebildet oder angeordnet ist, die Dauer des Leitens von zumindest einem der Schaltelemente zu steuern, und zwar innerhalb einer vorgegebenen Zeitlänge oder Zeitdauer oder Zeitgrenze (duration limit(s)), dies in Übereinstimmung mit dem Spannungswert von zumindest einem der Ausgänge (V_{CC}) des Transformators (T) und einem benötigten Spannungswert an dem Ausgang (V_{CC});
- zumindest einen Niederspannungs-Ausgang und zumindest einen Hochspannungs-Ausgang;
- **dadurch gekennzeichnet, dass** das Netzteilsystem weiter umfasst;
- zumindest eine Vergleichseinrichtung (3), welche ausgebildet oder angeordnet ist, die gleichgerichtete Eingangsspannung (V_{T}) zu messen und zumindest ein Schaltelement ausblendet oder ausschaltet, wenn die gleichgerichtete Eingangsspannung (V_{T}) unter einen gegebenen Spannungs-Schwellenwert fällt;
- zumindest einen Regler (4), welcher mit dem Hochspannungs-Ausgang des Transformators verbunden ist und ausgebildet oder angeordnet ist, eine Spannung auszugeben, die gleich der Spannung des Niederspannungs-Ausgangs des Transformators ist;
- zumindest ein anderes Schaltelement, welches einem Niederspannungs-Ausgang des Systems (S2) das Speisen eines Hauptschaltkreises (5) ermöglicht, während der normalen Eingangsspannungs-Situation, und dem Regler (4) ermöglicht, den Hauptschaltkreis (5) zu speisen, wenn die Vergleichseinrichtung (3) erkennt
oder erfasst, dass die gleichgerichtete Eingangsspannung (V_{T}) unter den gegebenen Spannungs-Schwellenwert sinkt oder fällt.

2. Netzteilsystem (S2) nach Anspruch 1, **dadurch gekennzeichnet, dass** es weiter zumindest eine Sperr-Einrichtung umfasst (inhibition means) , welche mit der Vergleichseinrichtung (3) verbunden ist und zumindest ein Schaltelement ausblendet oder sperrt (cancels) , wenn die Vergleichseinrichtung (3) erfasst oder erkennt, dass die gleichgerichtete Eingangsspannung (V_{T}) unter die gegebene Schwellenspannung sinkt.

3. Netzteilsystem (S2) nach Anspruch 1, **dadurch gekennzeichnet, dass** es weiter zumindest eine Diode umfasst, welche in Reihe geschaltet ist zu entweder dem Niederspannungs-Ausgang des Systems (S2) oder dem Ausgang des Reglers (4).

4. **Rücksetz-Schutzverfahren** (Reset-Protection) für Systeme mit einem Netzteilsystem (S2) mit zumindest einem Niederspannungs-Ausgang, zumindest einem Hochspannungs-Ausgang und zumindest zwei Schaltelementen, welche so angeordnet oder ausgebildet sind, den Leistungsfluss des Netzteil-Systems (S2) zu steuern; und zumindest eine Hauptschaltung (5), welche durch oder von dem NiederspannungsAusgang des Netzteil-Systems (S2) gespeist wird, **dadurch gekennzeichnet, dass** das Verfahren die folgenden Schritte aufweist
- Messen einer Eingangsspannung (V_{T}) des Netzteil-Systems (S2);
- Vergleichen der gemessenen Spannung mit einem gegebenen Schwellenwert;
- Ausblenden oder Ausschalten von zumindest einem Schaltelement, wenn die gemessene Spannung kleiner als der Schwellenwert ist;
wobei, wenn das Schaltelement ausgeblendet oder ausgeschaltet ist, die Hauptschaltung (5) über zumindest einen Regler (4) gespeist wird, welcher von dem Hochspannungs-Ausgang des Netzteil-Systems (S2) versorgt wird.

## Revendications

1. Système d'alimentation (S2) qui comprend :
- au moins un redresseur (1), qui est connecté à l'entrée secteur et redresse la tension d'entrée (Vin) ;
- au moins un transformateur (T), qui est agencé pour convertir la tension d'entrée redressée (V_{T}) en tensions de sortie (V_{CC}) ;
- au moins une capacité brute (C1) pour éliminer des discontinuités de tension de la tension d'entrée (V_{T}) du transformateur ;
- au moins deux éléments de commutation, qui commutent des courants à l'entrée du transformateur (T) ;
- au moins une unité de commande (2), qui est agencée pour commander la durée de conduction d'au moins l'un des éléments de commutation dans des limites de durée prédéfinies, en conformité avec la valeur de tension d'au moins l'une des sorties (V_{CC}) du transformateur (T) et d'une valeur de tension requise à ladite sortie (V_{CC}) ;
- au moins une sortie basse tension et au moins une sortie haute tension,
**caractérisé en ce que** ledit système d'alimentation comprend en outre :
- au moins un moyen de comparaison (3) qui est agencé pour mesurer la tension d'entrée redressée (V_{T}) et annuler au moins un élément de commutation dans le cas où ladite tension d'entrée redressée (V_{T}) chute en dessous d'une tension seuil prédéfinie ;
- au moins un régulateur (4) qui est connecté à ladite sortie haute tension du transformateur et est agencé pour fournir en sortie une tension égale à la tension de la sortie basse tension du transformateur
- au moins un autre élément de commutation, qui permet à la sortie basse tension du système (S2) d'alimenter un circuit principal (5) pendant une situation d'entrée de tension normale et qui permet au régulateur (4) d'alimenter le circuit principal (5) lorsque le moyen de comparaison (3) détecte que ladite tension d'entrée (V_{T}) redressée chute en dessous de ladite tension seuil prédéfinie.

2. Système d'alimentation (S2) selon la revendication 1, **caractérisé en ce qu'**il comprend en outre au moins un moyen d'inhibition qui est connecté au moyen de comparaison (3) et annule au moins un élément de commutation lorsque le moyen de comparaison (3) détecte que ladite tension d'entrée (V_{T}) redressée chute en dessous de ladite tension seuil prédéfinie.

3. Système d'alimentation (S2) selon la revendication 1, **caractérisé en ce qu'**il comprend en outre au moins une diode qui est connectée en série soit à la sortie basse tension du système (S2), soit à la sortie du régulateur (4).

4. Procédé de protection de réinitialisation pour des systèmes comprenant un système d'alimentation (S2) avec au moins une sortie basse tension, au moins une sortie haute tension et au moins deux éléments de commutation qui sont agencés pour commander le transit de puissance du système d'alimentation (S2) ; et au moins un circuit principal (5) qui est alimenté par l'intermédiaire de la sortie basse tension du système d'alimentation (S2), **caractérisé en ce que** ledit procédé comprend les étapes de :
- mesure d'une tension d'entrée (V_{T}) du système d'alimentation (S2) ;
- comparaison de la tension mesurée à un seuil prédéfini ;
- annulation d'au moins un élément de commutation si la tension mesurée est inférieure audit seuil
dans lequel lorsque ledit élément de commutation est annulé, le circuit principal (5) est alimenté à travers au moins un régulateur (4) qui est alimenté par la sortie haute tension du système d'alimentation (S2).
